# FASCICULE DE BREVET EUROPEEN

(11) **EP 3 194 271 B1**
(45) Date de publication et mention de la délivrance du brevet: **29.01.2020**
(21) Numéro de dépôt: 15748295.1
(22) Date de dépôt: 22.07.2015
(51) Int. Cl.: B64D 15/12

(54) **PROCÉDÉ DE MISE EN PLACE D'UN SYSTÈME DE DÉGIVRAGE SUR UN AÉRONEF, COMPORTANT LE DÉPÔT DE COUCHES DE MATÉRIAUX À L'ÉTAT SOLIDE ET/OU FLUIDE**
VERFAHREN ZUR ANBRINGUNG EINES ENTEISUNGSSYSTEMS AUF EIN FLUGZEUG, WOBEI EINE FLUIDE ODER FESTE SCHICHT AUFGETRAGEN WIRD
METHOD FOR ASSEMBLING AN ANTI-ICING SYSTEM ON AN AIRCRAFT, COMPRISING APPLYING A LAYER OF SOLIDOR LIQUID STATE MATERIAL

(30) Priorité: 22.07.2014 FR 1457079
(43) Date de publication de la demande: 26.07.2017
(73) Titulaire: Safran Nacelles, 76700 Gonfreville-l'Orcher (FR)
(72) Inventeur: COAT-LENZOTTI, Caroline, 78117 Toussus Le Noble (FR); KERBLER, Olivier, 92160 Antony (FR); MAALIOUNE, Hakim, 78630 Orgeval (FR); RAMI, Jean-Paul, 76600 Le Havre (FR)
(74) Mandataire: Delorme, Nicolas
(86) Numéro de dépôt international: PCT/FR2015/052017
(87) Numéro de publication internationale: WO 2016/012719

(56) Documents cités:
- EP-A2- 1 826 119
- WO-A1-01/08973
- WO-A1-2006/085054
- WO-A1-2011/096851
- WO-A1-2014/106725
- WO-A2-2004/105440
- US-A1- 2010 096 507
- US-B1- 6 237 874

## Description

La présente invention concerne un procédé de mise en place d'un système de dégivrage d'une peau d'aéronef, ainsi qu'une nacelle de turboréacteur comportant des lèvres d'entrée présentant un système de dégivrage déposé avec un tel procédé.

Les bords d'attaque des aéronefs, en particulier l'entourage de l'entrée d'air des capots de turboréacteurs et plus généralement tout bord d'attaque d'une nacelle comme par exemple certains types de tuyères à géométrie variable, formant des rebords bombés tournés vers l'avant, peuvent dans certaines conditions climatiques comme la traversée de nuages avec une basse température, présenter la formation de givre qui finit par constituer des blocs de glace.

On obtient alors un alourdissement de la structure, qui peut causer un déséquilibre latéral de l'aéronef, ainsi qu'une perte des qualités aérodynamiques par un mauvais écoulement de l'air sur cette surface irrégulière. De plus dans le cas d'entrée d'air du turboréacteur, on peut obtenir un détachement de blocs de glace qui rentrent dans cette machine, et endommagent des aubes de la soufflante et des compresseurs. Les autorisations de vol dans des conditions givrantes nécessitent la présence d'un système de dégivrage.

Pour éviter la formation de givre sur les surfaces concernées, un procédé connu, présenté notamment par le document EP-A2-1495963, comporte la dépose sur les surfaces d'un complexe multicouche collé comprenant des grilles électriquement conductrices formant des résistances, des couches électriquement et thermiquement isolantes, et une structure alvéolaire destinée à réduire les émissions acoustiques.

Il est prévu une alimentation électrique pour chaque grille, afin de régler localement la puissance consommée ainsi que le niveau calorifique dégagé.

Toutefois la dépose de grilles conductrices n'est pas toujours facile sur des surfaces courbées qui peuvent être complexes, afin d'obtenir un ensemble suffisamment homogène comportant une puissance thermique régulièrement répartie dessus.

L'espacement des fils conducteurs à l'intérieur de la grille donne aussi un défaut d'homogénéité du chauffage de la surface, avec une température plus élevée à proximité des fils, et plus faible dans les mailles entre les fils. Le rendement thermique en fonction de la puissance électrique consommée, n'est pas optimisé.

De plus en cas d'endommagement de la grille conductrice, causé par exemple par un impact qui coupe des fils conducteurs de cette grille, on peut obtenir une mise hors service complète de la grille concernée, donnant une surface entière qui n'est plus protégée contre le givre.

Par ailleurs en utilisant une grille intégrée dans des couches isolantes, formant un tapis souple déposé et collé sur la surface, on a un risque de formation de bulles en dessous de ce tapis qui gêneraient les échanges thermiques, en particulier sur les surfaces comprenant une forte courbure où le tapis peut plus difficilement suivre un petit rayon. Un autre document représentant l'état de la technique est WO 2006/085054 A1.

La présente invention a notamment pour but d'éviter ces inconvénients de la technique antérieure.

Elle propose à cet effet un procédé de mise en place d'un système de dégivrage d'une peau extérieure d'un élément d'aéronef selon la revendication 1, remarquable en ce qu'il comporte le dépôt sur la peau de plusieurs couches indépendantes de matériaux solides et/ou fluides qui sont successivement durcis, comprenant au moins une couche de matériau à résistivité électrique contrôlée, recevant des électrodes conduisant un courant électrique venant d'une source extérieure, qui est encadrée de chaque côté par des couches d'un matériau isolant électriquement.

Un avantage de ce procédé de mise en place est qu'en utilisant un matériau à résistivité électrique contrôlée comme une peinture chargée en particules carbonées faiblement conductrices, on réalise de manière simple et économique une couche d'épaisseur variable et calibrée sur des surfaces extérieures de l'aéronef qui peuvent être complexes, comprenant différentes courbures pouvant être prononcées, donnant avec une alimentation par les électrodes judicieusement disposées, une puissance thermique homogène sur l'ensemble de ces surfaces.

En particulier la couche à résistivité contrôlée est protégée des fuites de courant extérieures par les deux couches électriquement isolantes l'encadrant, qui de la même manière peuvent être facilement mises en place sur des surfaces complexes avec le procédé de dépose de couches fluides.

Le procédé de mise en place du système de dégivrage selon l'invention peut comporter de plus une ou plusieurs des caractéristiques suivantes, qui peuvent être combinées entre elles.

Avantageusement, le procédé de mise en place comporte le dépôt de plusieurs secteurs indépendants électriquement du matériau à résistivité électrique. On peut ainsi contrôler de manière spécifique la puissance thermique de chaque surface couverte par un secteur.

Avantageusement, le procédé comporte le dépôt du côté intérieur du système de dégivrage, d'une couche isolante thermiquement. On limite ainsi les déperditions thermiques vers l'intérieur de la structure.

Avantageusement, le procédé comporte le dépôt du côté extérieur du système de dégivrage, d'une couche de protection contre la foudre.

Avantageusement, le procédé comporte le dépôt du côté extérieur de l'ensemble, d'une couche finale de protection contre l'érosion extérieure.

Selon l'invention, le procédé comporte le dépôt d'une couche de matériau à résistivité électrique contrôlée comprenant une peinture polyuréthane présentant des particules de carbone donnant la résistivité électrique contrôlée. Ce matériau est facile à mettre en œuvre, en donnant une bonne résistance.

En particulier, le procédé peut comporter le dépôt d'une couche de matériau à résistivité électrique contrôlée, suivant une épaisseur comprise entre environ 0,05mm et 0,5mm. On peut obtenir ainsi une résistance électrique qui convient.

En complément le procédé peut comporter une étape de dépôt d'une deuxième peau espacée de la première par le système de dégivrage.

En complément, le procédé peut comporter une étape de dépôt de capteurs de température intégrés dans la couche de matériau à résistivité électrique contrôlée. Ces capteurs permettent d'effectuer une régulation précise de la température, qui optimise la consommation d'énergie.

En complément, le dépôt de la couche de matériau à résistivité électrique contrôlée est effectué sur la face interne de ladite peau.

L'invention a aussi pour objet une nacelle de turboréacteur comprenant une peau extérieure formant une lèvre entourant l'entrée d'air amont, qui comporte un système de dégivrage mis en place par un procédé comprenant l'une quelconque des caractéristiques précédentes.

L'invention a aussi pour objet un procédé de réparation d'une nacelle conforme à ce qui précède, dans lequel on répare lesdites couches par ponçage, installation éventuelle d'un patch en cas de trou, et re-dépôt desdites couches dans la zone à réparer.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 est un schéma en coupe transversale d'un moyen de dégivrage mis en place avec un procédé selon l'invention, disposé à l'intérieur d'une peau interne métallique ;
- la figure 2 est en variante un schéma d'un moyen de dégivrage disposé à l'extérieur d'une peau interne métallique ;
- la figure 3 est en variante un schéma d'un moyen de dégivrage disposé à l'extérieur d'une peau en matériau composite ;
- la figure 4 est en variante un schéma d'un moyen de dégivrage disposé entre deux peaux en matériau composite ou métallique ou combiné (une peau métallique et une peau composite) ; et
- la figure 5 est en variante un schéma d'un moyen de dégivrage disposé à l'intérieur d'une peau en matériau composite.

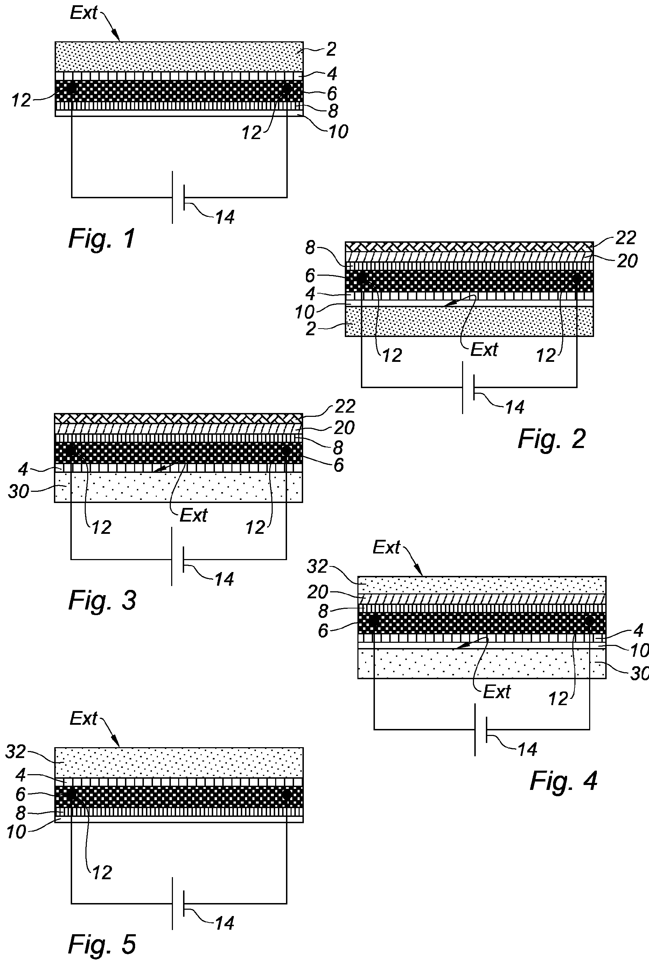

La figure 1 présente la peau métallique extérieure rigide 2 d'une structure d'un aéronef, comportant une surface supérieure Ext tournée vers l'avant de cette structure, qui peut être soumise au dépôt de givre. La peau métallique 2 peut comporter en particulier un alliage d'aluminium ou de titane.

La peau métallique 2 reçoit sur sa surface intérieure des matériaux fluides qui sont successivement polymérisés, pour constituer une première couche formant un premier isolant électrique 4, une deuxième couche comprenant un matériau à résistivité électrique contrôlée 6, une troisième couche formant un deuxième isolant électrique 8, et une quatrième couche formant un isolant thermique 10.

Les couches isolantes électriquement 4, 8 et à résistivité électrique 6 comportent chacune un matériau fluide visqueux comme une peinture, qui est déposé par exemple au pinceau, au rouleau ou par pulvérisation, de manière à obtenir une épaisseur définie dépendant en particulier de la viscosité, du type d'application et du nombre d'applications successives. Une alternative consisterait à déposer une ou plusieurs couches sous forme de films, les matériaux de ces films se trouvant donc à l'état solide.

Deux électrodes 12 disposées dans l'épaisseur de la couche à résistivité électrique 6, et reliées par des fils électriques à un générateur de courant 14, forme les pôles positif et négatif permettant d'alimenter cette couche par un courant de puissance contrôlée suivant les besoins de dégivrage.

On peut notamment faire varier l'épaisseur de la couche à résistivité électrique 6 suivant les endroits à traiter, de manière à obtenir une résistance variable, et une capacité thermique de chauffe adaptée suivant ces endroits.

Les deux couches isolantes électriquement 4, 8 évitent des déperditions de courant à l'extérieur du matériau à résistivité électrique 6, afin d'obtenir le meilleur rendement calorifique de ce matériau en fonction de la puissance électrique consommée.

La couche finale isolante thermiquement 10 permet de limiter les déperditions thermiques vers l'intérieur de la structure, afin d'utiliser au maximum les calories dégagées par l'effet Joule pour chauffer la peau métallique extérieure 2 et faire fondre le givre déposé dessus ou empêcher celui-ci de former.

On peut en particulier déposer le matériau à résistivité électrique 6 avec ses électrodes 12 suivant des secteurs délimités, ce qui permet de chauffer de manière indépendante différentes surfaces de la structure. Le chauffage des secteurs peut notamment se faire de manière spécifique pour chaque secteur suivant les besoins locaux en dégivrage. Il peut aussi se faire de manière alternative entre les secteurs pour limiter la puissance électrique instantanée consommée.

Avantageusement le matériau à résistivité électrique 6 comporte une peinture polyuréthane chargée en particules de carbone, qui lui procure une faible résistivité électrique.

En complément le matériau à résistivité électrique 6 peut recevoir des capteurs de température, afin de commander le pilotage du chauffage des différents secteurs pour effectuer une régulation de puissance électrique en fonction de la température mesurée, et une optimisation de l'énergie consommée.

En utilisant pour les différentes couches de matériaux un matériau fluide comme une peinture déposé sur la surface, on assure un contact intime de ces couches sur la totalité de la surface, en évitant la formation de bulles en dessous qui formeraient une isolation gênant localement l'échange thermique.

En particulier on peut réaliser une couche à résistivité électrique 6 d'épaisseur comprise entre 0,05mm et 0,5mm. En adaptant la dimension et la position des électrodes en fonction de la tension électrique disponible et de la puissance attendue, on peut obtenir ainsi une puissance thermique de plusieurs kW/m², répartie de manière uniforme sur toute la surface quelles que soient les courbures variables que peuvent présenter les entrées d'air des turboréacteurs ou plus généralement peut être applicable à tout bord d'attaque d'une nacelle comme par exemple certain type de tuyère à géométrie variable ou les bords d'attaque des ailes.

On obtient une température basse et homogène qui économise l'énergie, et une montée en température qui peut être rapide. Le courant électrique consommé pouvant être continu, on a un système électrique passif présentant une faible émission électromagnétique, ce qui évite de générer des perturbations.

De plus en cas d'un accident de surface local, suite à l'impact d'un objet par exemple, l'ensemble de la conduction électrique formée par le secteur de la couche à résistivité 6 n'est pas atteint, ce secteur peut continuer à chauffer avec une efficacité diminuée, il n'est pas complètement en panne.

Pour effectuer la réparation d'un secteur on peut poncer localement la défaillance, et réparer à cet endroit les différentes couches avec les déposes successives des matériaux d'origine. On peut aussi reprendre l'ensemble du secteur si nécessaire, en le ponçant complètement pour reprendre au départ le procédé de dépose des différentes couches. On peut ainsi réparer de manière simple et économique des défaillances du moyen de dégivrage.

La figure 2 présente la peau métallique rigide 2 comportant une surface supérieure Ext tournée vers l'extérieur, qui reçoit par le dépôt successif de matériaux fluides polymérisés, une couche formant un isolant thermique 10, une couche formant un premier isolant électrique 4, une couche de matériau à résistivité électrique 6, et une couche formant le deuxième isolant électrique 8 de ce matériau.

On dépose ensuite une couche 20 de protection contre la foudre qui est électriquement conductrice, et une couche 22 formant une surface extérieure résistante de protection contre l'érosion.

A noter que cette description n'est pas restrictive ; en effet, il peut être envisagé qu'une seule couche puisse à la fois assurer la protection contre la foudre et l'érosion (donc fusion des couches 20 et 22).

De même, on peut imaginer qu'une future évolution de la peinture 6 puisse assurer plusieurs fonctions, comme par exemple une peinture 6 assurant la protection contre la foudre.

On notera que l'isolant thermique 10 est déposé en premier de façon à former l'isolation vers l'intérieur limitant les déperditions de calories de ce côté, pour obtenir un chauffage maximum de la surface extérieure de la couche finale de protection contre l'érosion 22, soumise au dépôt de givre.

La figure 3 présente une peau rigide 30 en matériau composite monolithique ou sandwiche comportant des fibres de carbone, recevant successivement sur sa surface supérieure Ext tournée vers l'extérieur, une première couche d'isolation électrique 4, une couche de matériau à résistivité électrique 6, et une deuxième couche d'isolation électrique 8 de ce matériau.

On dépose ensuite une couche de protection contre la foudre 20, et une couche de protection contre l'érosion extérieure 22.

On notera que la peau rigide 30 en matériau composite formant naturellement un isolant thermique, on peut se passer de la couche d'isolation thermique prévue précédemment pour une peau thermiquement conductrice.

La figure 4 présente une structure composée de deux peaux rigides 30, 32 en matériau composite monolithique ou sandwiche ou métallique ou combiné, espacées par la superposition des couches déposées suivant le procédé selon l'invention, ce qui donne un ensemble très rigide.

On dépose successivement sur la surface extérieure Ext de la peau inférieure 30, une couche d'isolation thermique 10, une première couche d'isolation électrique 4, une couche de matériau à résistivité électrique 6, et une deuxième couche d'isolation électrique 8 de ce matériau.

On dépose ensuite une couche de protection contre la foudre 20. On dépose enfin la peau rigide supérieure 32 en la moulant directement sur cet ensemble, qui forme une protection contre l'érosion extérieure.

En variante on peut déposer à l'inverse les couches à l'intérieur de la peau rigide supérieure 32, pour finir par la peau rigide inférieure 30.

On notera que la première couche d'isolation thermique 10 déposée sur la peau inférieure 30, peut ne pas être utilisée si cette première peau constitue une isolation thermique suffisante qui n'a pas besoin d'être doublée.

La figure 5 présente une structure composée d'une unique peau rigide supérieure 32 en matériau composite monolithique ou sandwiche, se trouvant directement à l'extérieur, qui reçoit les couches superposées sur sa face intérieure.

On dépose successivement sur la face intérieure de la peau supérieure 32 une première couche d'isolation électrique 4, une couche de matériau à résistivité électrique 6, et une deuxième couche d'isolation électrique 8 de ce matériau.

On dépose enfin une couche finale d'isolation thermique intérieure 10, qui limite les déperditions de calories vers l'intérieur de la structure.

Le procédé suivant l'invention permet ainsi de couvrir tous types de peau extérieure, thermiquement conductrice ou non, par l'intérieur ou par l'extérieur de cette peau suivant les possibilités, pour obtenir un système de dégivrage particulièrement homogène et comportant un bon rendement.

## Revendications

1. Procédé de mise en place d'un système de dégivrage d'une peau d'un élément d'aéronef, comportant le dépôt sur la peau de plusieurs couches indépendantes de matériaux solides et/ou fluides qui sont successivement durcis, comprenant au moins une couche de matériau à résistivité électrique contrôlée (6), recevant des électrodes (12) conduisant un courant électrique venant d'une source extérieure (14), qui est encadrée de chaque côté par des couches d'un matériau isolant électriquement (4, 8),
ce procédé étant **caractérisé en ce que** ladite couche à résistivité électrique contrôlée (6) est une couche de peinture polyuréthane chargée de particules de carbone.

2. Procédé de mise en place selon la revendication 1, **caractérisé en ce qu'**il comporte le dépôt de plusieurs secteurs indépendants électriquement du matériau à résistivité électrique (6).

3. Procédé de mise en place selon la revendication 1 ou 2, **caractérisé en ce qu'**il comporte le dépôt du côté intérieur du système de dégivrage, d'une couche isolante thermiquement (10).

4. Procédé de mise en place selon l'une quelconque des revendications précédentes, **caractérisé en ce qu'**il comporte le dépôt du côté extérieur du système de dégivrage, d'une couche de protection contre la foudre (20).

5. Procédé de mise en place selon l'une quelconque des revendications précédentes, **caractérisé en ce qu'**il comporte le dépôt du côté extérieur de l'ensemble, d'une couche finale de protection contre l'érosion extérieure (22).

6. Procédé de mise en place selon l'une quelconque des revendications précédentes, **caractérisé en ce qu'**il comporte le dépôt d'une couche de matériau à résistivité électrique contrôlée (6), suivant une épaisseur comprise entre environ 0,05mm et 0,5mm.

7. Procédé de mise en place selon l'une quelconque des revendications précédentes, **caractérisé en ce qu'**il comporte une étape de dépôt d'une deuxième peau (32) espacée de la première (30) par le système de dégivrage.

8. Procédé de mise en place selon l'une quelconque des revendications précédentes, **caractérisé en ce qu'**il comporte une étape de dépôt de capteurs de température intégrés dans la couche de matériau à résistivité électrique contrôlée (6).

9. Procédé de mise en place suivant la revendication 7, **caractérisé en ce que** le dépôt de l'une des couches de matériau isolant (4, 8) est effectué sur ladite deuxième peau (32).

10. Nacelle de turboréacteur comprenant une peau extérieure formant une lèvre entourant l'entrée d'air amont, **caractérisée en ce que** cette peau comporte un système de dégivrage mis en place par un procédé suivant l'une quelconque des revendications précédentes.

11. Procédé de réparation d'une nacelle conforme à la revendication 10, dans lequel on répare lesdites couches par ponçage, installation éventuelle d'un patch en cas de trou, et re-dépôt desdites couches dans la zone à réparer.

## Patentansprüche

1. Verfahren zur Installation eines Enteisungssystems einer Haut eines Luftfahrzeugelements, aufweisend das Aufbringen auf die Haut von mehreren unabhängigen Schichten fester und/oder fluider Materialien, die aufeinanderfolgend gehärtet werden, umfassend mindestens eine Schicht eines Materials mit gesteuerter elektrischer Resistivität (6), die Elektroden (12) aufnimmt, die einen elektrischen Strom führen, der von einer äußeren Quelle (14) kommt, die auf jeder Seite von Schichten eines elektrisch isolierenden Materials (4, 8) umgeben ist,
wobei dieses Verfahren **dadurch gekennzeichnet ist, dass** die Schicht mit gesteuerter Resistivität (6) eine mit Carbonpartikeln angereicherte Polyurethanlackschicht ist.

2. Installationsverfahren nach Anspruch 1, **dadurch gekennzeichnet, dass** es das Aufbringen von mehreren elektrisch unabhängigen Sektoren des Materials mit elektrischer Resistivität (6) aufweist.

3. Installationsverfahren nach Anspruch 1 oder 2, **dadurch gekennzeichnet, dass** es das Aufbringen einer thermisch isolierenden Schicht (10) auf die Innenseite des Enteisungssystems aufweist.

4. Installationsverfahren nach einem der vorangehenden Ansprüche, **dadurch gekennzeichnet, dass** es das Aufbringen einer Schutzschicht gegen Blitzschlag (20) auf die Außenseite des Enteisungssystems aufweist.

5. Installationsverfahren nach einem der vorangehenden Ansprüche, **dadurch gekennzeichnet, dass** es das Aufbringen einer abschließenden Schutzschicht gegen Erosion von außen (22) auf die Außenseite der Einheit aufweist.

6. Installationsverfahren nach einem der vorangehenden Ansprüche, **dadurch gekennzeichnet, dass** es das Aufbringen einer Schicht eines Materials mit gesteuerter elektrischer Resistivität (6) gemäß einer Stärke aufweist, die zwischen zirka 0,05 mm und 0,5 mm liegt.

7. Installationsverfahren nach einem der vorangehenden Ansprüche, **dadurch gekennzeichnet, dass** es einen Schritt des Aufbringens einer zweiten Haut (32), beabstandet von der ersten (30) durch das Enteisungssystem, aufweist.

8. Installationsverfahren nach einem der vorangehenden Ansprüche, **dadurch gekennzeichnet, dass** es einen Schritt des Aufbringens von Temperatursensoren aufweist, die in die Schicht eines Materials mit gesteuerter elektrischer Resistivität (6) integriert sind.

9. Installationsverfahren nach Anspruch 7, **dadurch gekennzeichnet, dass** das Aufbringen von einer der Schichten eines isolierenden Materials (4, 8) auf der zweiten Haut (32) erfolgt.

10. Turbotriebwerksgondel, umfassend eine Außenhaut, die eine Lippe bildet, welche den vorgelagerten Lufteintritt umgibt, **dadurch gekennzeichnet, dass** diese Haut ein Enteisungssystem aufweist, das mittels eines Verfahrens nach einem der vorangehenden Ansprüche installiert ist.

11. Verfahren zur Reparatur einer Gondel nach Anspruch 10, wobei die Schichten durch Grobschleifen, eventuelle Installation eines Patch bei einem Loch, und erneutes Aufbringen der Schichten im zu reparierenden Bereich repariert werden.

## Claims

1. A method for setting up a system for deicing a skin of an aircraft element, including the deposition over the skin of several independent layers of solid and/or fluid materials which are successively set, comprising at least one layer of a material with a controlled electric resistivity (6), receiving electrodes (12) conducting an electric current originating from an external source (14), which is surrounded on each side by layers of an electrically-insulating material (4, 8),
this method being **characterized in that** said layer with a controlled electric resistivity (6) is a layer of a polyurethane paint charged with carbon particles.

2. The set-up method according to claim 1, **characterized in that** it includes the deposition of several electrically independent sectors of the material with an electric resistivity (6).

3. The set-up method according to claim 1 or 2, **characterized in that** it includes the deposition on the internal side of the deicing system, of a heat-insulating material (10).

4. The set-up method according to any one of the preceding claims, **characterized in that** it includes the deposition on the external side of the deicing system, of a layer for protection against lightning (20).

5. The set-up method according to any one of the preceding claims, **characterized in that** it includes the deposition on the external side of the set, of an final layer for protection against external erosion (22).

6. The set-up method according to any one of the preceding claims, **characterized in that** it includes the deposition of a layer of a material with a controlled electric resistivity (6), across a thickness comprised between about 0.05 mm and 0.5 mm.

7. The set-up method according to any one of the preceding claims, **characterized in that** it includes a step of depositing a second skin (32) spaced from the first one (30) by the deicing system.

8. The set-up method according to any one of the preceding claims, **characterized in that** it includes a step of depositing temperature sensors integrated into the layer of a material with a controlled electric resistivity (6).

9. The set-up method according to claim 7, **characterized in that** the deposition of one of the layers of an insulating material (4, 8) is performed over said second skin (32).

10. A turbojet engine nacelle comprising an external skin forming a lip surrounding the upstream air inlet, **characterized in that** this skin includes a deicing system set in place by a set-up method according to any one of the preceding claims.

11. A method for repairing a nacelle in accordance with claim 10, wherein said layers are repaired by sanding, possible installation of a patch should there be a hole, and re-deposition of said layers over the area to be repaired.
